# EUROPÄISCHE PATENTSCHRIFT

(11) **EP 2 923 545 B1**
(45) Veröffentlichungstag und Bekanntmachung des Hinweises auf die Patenterteilung: **07.06.2017**
(21) Anmeldenummer: 15401019.3
(22) Anmeldetag: 17.03.2015
(51) Int. Cl.: A01C 7/08

(54) **Vorrichtung zum Fördern von granularem Material**
Device for conveying granular material
Dispositif de transport de matériau granulaire

(30) Priorität: 24.03.2014 DE 102014103971
(43) Veröffentlichungstag der Anmeldung: 30.09.2015
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Wien, Thomas, 28816 Stuhr (DE)

(56) Entgegenhaltungen:
- EP-B1- 2 298 056
- FR-A1- 2 973 790
- US-A1- 2007 022 928

## Beschreibung

Die vorliegende Erfindung betrifft eine Vorrichtung zum Fördern von auf einer landwirtschaftlichen Fläche auszubringendem granularem Material.

Derartige Vorrichtungen finden beispielsweise in Einzelkornsämaschinen Anwendung, um Saatgut, welches in einem zentralen Saatgutvorratsbehälter angeordnet ist, zu den einzelnen Vereinzelungsgehäusen zu transportieren. Eine solche Vorrichtung ist beispielsweise aus der FR 2 973 790 bekannt. Durch eine in der pneumatischen Förderleitung angeordnete verschwenkbare Klappe kann dir Förderstrom und somit die Förderung von Material unterbrochen werden.

Bei den bekannten Systemen nach der EP 2 298 056B1 wird kontinuierlich Saatgut in die Vereinzelungsgehäuse geleitet, das sich dort zunächst in separaten Vorratsbereichen sammelt, bevor es durch die mit einer Druckdifferenz beaufschlagte Vereinzelungstrommel vereinzelt und zum Ausbringen auf dem Feld an entsprechende Säschare weitergeleitet wird.

Der Vorratsbereich im Vereinzelungsgehäuse beansprucht Platz, wodurch der Raumbedarf für die Vereinzelungsgehäuse erhöht ist. Außerdem kann das im Vereinzelungsgehäuse angeordnete Saatgut die Druck- und Strömungsverhältnisse im Vereinzelungsgehäuse negativ beeinflussen.

Daher ist es Aufgabe der vorliegenden Erfindung, eine verbesserte Vorrichtung zum Fördern von auf einer landwirtschaftlichen Fläche auszubringendem granularem Material bereitzustellen. Diese Aufgabe wird durch eine Vorrichtung gemäß Patentanspruch 1 gelöst.

Durch die im Förderkanal vorgesehene Förderschleuse kann die Menge an granularem Material, die sich jeweils im Vereinzelungsgehäuse befindet, entsprechend eingestellt oder gesteuert werden. Dadurch kann verhindert werden, dass sich zu viel granulares Material gleichzeitig im Vereinzelungsgehäuse befindet und damit die Druckverhältnisse negativ beeinflusst. Gleichzeitig kann der Bereich des Vereinzelungsgehäuses, in dem das granulare Material vor der Vereinzelung angeordnet wird, räumlich kleiner dimensioniert werden.

Bei dem Vorratsbehälter kann es sich insbesondere um einen zentralen Vorratsbehälter handeln, von dem aus granulares Material an die Vereinzelungseinrichtung förderbar ist. Es können auch mehrere Vereinzelungseinrichtungen vorgesehen sein. In diesem Fall kann der Vorratsbehälter mit jeder der Vereinzelungsvorrichtungen über einen separaten pneumatischen Förderkanal zum pneumatischen Fördern von granularem Material an die jeweilige Vereinzelungseinrichtung verbunden sein. In diesem Fall kann in jedem der Förderkanäle eine entsprechende einstellbare Förderschleuse angeordnet sein.

Bei dem granulären Material kann es sich insbesondere um Saatgut handeln, alternativ oder zusätzlich jedoch auch um Düngemittel oder Pestizid.

Die Vereinzelungseinrichtung kann ein insbesondere mit einem Überdruck beaufschlagtes Vereinzelungsgehäuse umfassen. Das Vereinzelungsgehäuse kann einen Vorratsbereich für granulares Material aufweisen. Der Förderkanal kann dabei in das Fördergehäuse, insbesondere in den Vorratsbereich, münden.

Die Vereinzelungseinrichtung kann zumindest eine mit einer Druckdifferenz beaufschlagbare Vereinzelungstrommel umfassen. Die Vereinzelungstrommel kann insbesondere in Perforationsreihen angeordnete Perforationen aufweisen. An diesen Perforationen kann sich das granulare Material bei der Durchführung der Perforationen durch den Vorratsbereich anlagern, wodurch es zu einer Vereinzelung kommt.

Die Vorrichtung kann außerdem ein Gebläse umfassen, das mit dem pneumatischen Förderkanal verbunden ist. Mit Hilfe des Gebläses kann im pneumatischen Förderkanal ein entsprechender Förderluftstrom erzeugt werden, mit dem das granulare Material pneumatisch gefördert werden kann. Durch das Gebläse kann im pneumatischen Förderkanal insbesondere ein Überdruck gegenüber dem Atmosphärendruck erzeugt werden.

Bei der Förderschleuse kann es sich insbesondere um eine Zellenradschleuse handeln. Damit kann die Fördermenge auf besonders effektive und einfache Weise eingestellt werden.

Es ist jedoch auch denkbar, dass die Förderschleuse eine verschwenkbare und/oder verschiebbare Klappe umfasst, welche abhängig von ihrer Anordnung im Förderkanal die Fördermenge steuert oder regelt. Dadurch kann eine mechanisch besonders einfache Förderschleuse realisiert werden.

Als Fördermenge kann in diesem Zusammenhang insbesondere die Menge an granularem Material verstanden werden, welche durch die Förderschleuse pro Zeiteinheit von der Vorratsbehälterseite der Förderschleuse zur Vereinzelungseinrichtungsseite der Förderschleuse gefördert wird. Die Menge an granularem Material kann insbesondere der Masse des geförderten granularen Materials entsprechen.

Die Förderschleuse kann insbesondere in einen geschlossenen Zustand bringbar sein, in dem kein granulares Material von der Vorratsbehälterseite der Förderschleuse zur Vereinzelungseinrichtungsseite der Förderschleuse förderbar ist. Dadurch kann die Zufuhr von granularem Material an die Vereinzelungseinrichtung wenigstens temporär unterbrochen werden.

Die Förderschleuse kann entsprechend in einen geöffneten Zustand bringbar sein, in dem das granulare Material ungehindert oder im Wesentlichen ungehindert von der Vorratsbehälterseite der Förderschleuse zur Vereinzelungseinrichtungsseite der Förderschleuse förderbar ist.

Die Förderschleuse kann insbesondere wahlweise in die geschlossene oder in die geöffnete Position bringbar sein.

Die Vorratsbehälterseite der Förderschleuse ist insbesondere stromaufwärts der Förderschleuse angeordnet während die Vereinzelungseinrichtungsseite der Förderschleuse stromabwärts der Förderschleuse angeordnet ist.

Die Förderschleuse kann so im Förderkanal angeordnet sein, dass stromaufwärts und stromabwärts Abschnitte des Förderkanals, insbesondere unmittelbar, angrenzen. Die Förderschleuse könnte stromabwärts jedoch auch direkt an das Vereinzelungsgehäuse der Vereinzelungseinrichtung angrenzen.

Die Fördermenge kann insbesondere abhängig vom Luftdruck im pneumatischen Förderkanal einstellbar sein. Dadurch kann auf einfache Weise auf die Strömungsverhältnisse im Förderkanal abgestellt werden.

Die Fördermenge der Förderschleuse kann also, insbesondere basierend auf dem Luftdruck im pneumatischen Förderkanal, steuerbar oder regelbar sein.

Die Fördermenge kann insbesondere abhängig vom Luftdruck im Abschnitt des pneumatischen Förderkanals, der stromaufwärts der Förderschleuse angeordnet ist, einstellbar sein.

Der verwendete Luftdruck kann dabei dem dynamischen Luftdruck oder dem statischen Luftdruck entsprechen.

Der pneumatische Förderkanals kann stromaufwärts der Förderschleuse eine oder mehrere Entlüftungsbohrungen aufweisen. Durch diese Entlüftungsbohrungen kann die Förderluft aus dem pneumatischen Förderkanal entweichen, wenn sich die Förderschleuse in einem geschlossenen Zustand befindet. Erst wenn die Entlüftungsbohrungen durch das granulare Material zunehmend blockiert werden, kann die Luft nicht mehr entweichen, was zu einer Erhöhung des statischen Luftdrucks im Förderkanal führt. Basierend auf dieser Druckerhöhung kann dann beispielsweise festgestellt werden, dass sich wieder eine bestimmte Menge zu förderndes granulares Material vor der Druckschleuse angeordnet hat.

Die eine oder mehreren Entlüftungsbohrungen oder -öffnungen können insbesondere unmittelbar stromaufwärts von der Förderschleuse angeordnet sein. Mit anderen Worten kann der Abschnitt des pneumatischen Förderkanals, der die Entlüftungsbohrungen aufweist, unmittelbar an die Förderschleuse angrenzen. Alternativ kann der mit den Entlüftungsbohrungen versehene Abschnitt auch einen vorherbestimmten Abstand von der Förderschleuse aufweisen.

Die eine oder mehreren Entlüftungsbohrungen können insbesondere einen kleineren Durchmesser aufweisen als der mittlere Durchmesser des zu fördernden granularen Materials. Dadurch kann es zu einer wenigstens teilweisen Blockierung der Entlüftungsbohrungen zum oben genannten Zweck kommen. Die eine oder mehreren Entlüftungsbohrungen können insbesondere einen Durchmesser von 1 mm bis 5 mm, bevorzugt von 3 mm, aufweisen.

Der pneumatische Förderkanal ist erfindungsgemäss über eine durchgängige Rohrleitung mit der Förderschleuse verbunden, wobei die durchgängige Rohrleitung stromaufwärts der Förderschleuse in den pneumatischen Förderkanal mündet und wobei der statische Luftdruck in der durchgängigen Rohrleitung direkt oder indirekt die Fördermenge der Förderschleuse bestimmt. Mit Hilfe der durchgängigen Rohrleitung kann auf einfache Weise der statische Luftdruck im pneumatischen Förderkanal bestimmt werden. Der sich auf die durchgängige Rohrleitung übertragende statische Luftdruck kann direkt oder unmittelbar verwendet werden, um ein mechanisches Element der Förderschleuse zu beeinflussen und damit die Fördermenge zu bestimmen. Mit anderen Worten kann die Förderschleuse durch den Luftdruck in der durchgängigen Rohrleitung geschaltet werden. Beispielsweise kann bei einem hohen statischen Luftdruck eine Klappe der Förderschleuse verschwenken, so dass der Durchgang durch die Förderschleuse freigegeben wird. Andererseits, wenn der statische Luftdruck wieder abfällt, kann die Klappe wieder in ihre Ausgangsposition zurückfallen, in der der pneumatische Förderkanal verschlossen wird, so dass die Fördermenge gleich null wird.

Die durchgängige Rohrleitung kann insbesondere senkrecht in den Förderkanal münden.

Durchgängig kann in diesem Fall insbesondere bedeuten, dass der an der Mündung der Rohrleitung in den Förderkanal vorherrschende Luftdruck unverändert oder im Wesentlichen unverändert am Anschluss der Rohrleitung an die Förderschleuse anliegt. Zusätzlich kann die Vorrichtung auch einen Drucksensor umfassen, der stromaufwärts der Förderschleuse angeordnet ist, wobei mit dem Drucksensor der Luftdruck im pneumatischen Förderkanal bestimmbar ist. Der Drucksensor kann den dynamischen und/oder den statischen Luftdruck im pneumatischen Förderkanal bestimmen. Der Drucksensor kann auch ein elektronischer Luftdrucksensor sein.

Die Fördermenge der Förderschleuse kann in Abhängigkeit von dem vom Drucksensor bestimmten Wert einstellbar sein, insbesondere elektronisch. Beispielsweise kann ein Antrieb der Förderschleuse, beispielsweise einer Zellenradschleuse, in Abhängigkeit von dem bestimmten Druckwert einstellbar sein.

Alternativ oder zusätzlich zum Drucksensor kann auch ein Sensor zur Bestimmung der Strömungsgeschwindigkeit der Förderluft im Förderkanal vorgesehen sein, welcher insbesondere stromaufwärts der Förderschleuse angeordnet ist. Aufgrund des Zusammenhangs der Strömungsgeschwindigkeit mit dem dynamischen Luftdruck im Förderkanal kann die Vorrichtung so ausgebildet sein, dass der dynamische Luftdruck basierend auf der bestimmten Strömungsgeschwindigkeit bestimmbar ist.

Alternativ kann die Vorrichtung auch so ausgebildet sein, dass die Fördermenge der Förderschleuse basierend auf der bestimmten Strömungsgeschwindigkeit einstellbar ist. Aufgrund des Zusammenhangs von Luftdruck und Strömungsgeschwindigkeit ist auch dann die Fördermenge im obigen Sinne basierend auf dem Luftdruck im Förderkanal einstellbar.

Alternativ oder zusätzlich zum Drucksensor kann auch ein Sensor zur Bestimmung der Menge an granularem Material, das vom Vorratsbehälter zur Förderschleuse gefördert wird, vorgesehen sein. Auch diese Größe steht mit der Strömungsgeschwindigkeit und damit mit dem dynamischen Luftdruck in Zusammenhang. Somit kann die Vorrichtung so ausgebildet sein, dass der dynamische Luftdruck basierend auf der bestimmten Menge an gefördertem granularem Material bestimmbar ist. Alternativ kann die Vorrichtung auch so ausgebildet sein, dass die Fördermenge der Förderschleuse basierend auf der bestimmten Menge an gefördertem granularem Material einstellbar ist. Aufgrund des Zusammenhangs von Luftdruck und Menge an gefördertem granularem Material ist auch dann die Fördermenge im obigen Sinne basierend auf dem Luftdruck im Förderkanal einstellbar.

Die Vorrichtung kann insbesondere derart ausgebildet sein, dass die Fördermenge null ist, wenn der statische Luftdruck unter einem ersten vorherbestimmten Wert oder der dynamische Luftdruck über einem zweiten vorherbestimmten Wert liegt, während sie größer null ist, wenn der statische Luftdruck über dem ersten vorherbestimmten Wert oder der dynamische Luftdruck unter dem zweiten vorherbestimmten Wert liegt. Dadurch kann erreicht werden, dass der Vereinzelungseinrichtung pulsartig oder intermittierend eine gewisse, vorherbestimmte Menge an granularem Material zugeführt wird.

Wird die Strömungsgeschwindigkeit als Steuergröße verwendet, kann die Vorrichtung derart ausgebildet sein, dass die Fördermenge null ist, wenn die Strömungsgeschwindigkeit über einem dritten vorherbestimmten Wert liegt, während sie größer null ist, wenn die Strömungsgeschwindigkeit unter dem dritten vorherbestimmten Wert liegt.

Wird die Menge an granularem Material, die vom Vorratsbehälter zur Förderschleuse gefördert wird als Steuergröße verwendet, kann die Vorrichtung derart ausgebildet sein, dass die Fördermenge null ist, wenn die Menge an granularem Material über einem vierten vorherbestimmten Wert liegt, während sie größer null ist, wenn die Menge an granularem Material unter dem vierten vorherbestimmten Wert liegt.

Die Förderschleuse kann auch als Druckschleuse wirken, welche insbesondere im geschlossenen Zustand den Bereich des Förderkanals stromaufwärts der Förderschleuse vom Bereich stromabwärts der Förderschleuse pneumatisch trennt. Dadurch kann die Beeinflussung des Luftdrucks in der Vereinzelungseinrichtung durch den Luftdruck im pneumatischen Förderkanal weiter verringert werden.

Die oben genannte Vorrichtung kann insbesondere Teil eines landwirtschaftlichen Geräts zum Ausbringen von granularem Material auf einer landwirtschaftlichen Fläche sein. Bei dem landwirtschaftlichen Gerät kann es sich insbesondere um eine Einzelkornsämaschine handeln.

Mit anderen Worten stellt die Erfindung außerdem eine Einzelkornsämaschine bereits, welche eine der oben genannten Vorrichtungen umfasst.

Die Erfindung stellt also insbesondere eine Einzelkornsämaschine bereit umfassend:
einen Vorratsbehälter für das granulare Material,
eine Vereinzelungseinrichtung und
einen pneumatischen Förderkanal zum pneumatischen Fördern von granularem Material vom Vorratsbehälter zur Vereinzelungseinrichtung,
wobei im pneumatischen Förderkanal eine Förderschleuse nach Anspruch 1 angeordnet ist. Weitere Merkmale und Vorteile der Erfindung werden nachfolgend anhand der beispielhaften Figuren erläutert. Dabei zeigt
   - Fig. 1: eine schematische Darstellung einer Vorrichtung;
   - Fig. 2: Teile der erfindungsgemäßen Vorrichtung in einem ersten Betriebszustand;
   - Fig. 3: Teile der erfindungsgemäßen Vorrichtung in einem zweiten Betriebszustand; und
   - Fig. 4: Teile der erfindungsgemäßen Vorrichtung in einem dritten Betriebszustand.

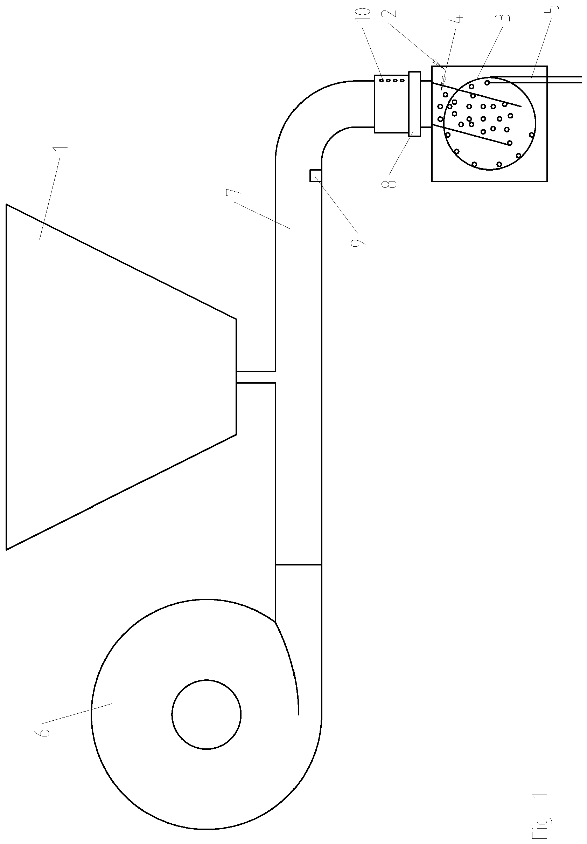

Figur 1 zeigt schematisch ein Beispiel einer Vorrichtung zum Fördern von auf einer landwirtschaftlichen Fläche auszubringendem granularem Material. Die Vorrichtung umfasst dabei einen Vorratsbehälter 1 für das auszubringende granulare Material. Dabei kann es sich insbesondere um Saatgut, alternativ jedoch auch um granularen Dünger oder granulare Pestizide handeln.

Außerdem ist eine Vereinzelungseinrichtung 2 vorgesehen, welche eine mit einer Druckdifferenz beaufschlagbare Vereinzelungstrommel 2 oder -scheibe 3 umfasst, welche in Perforationsreihen angeordnete Perforationen aufweist. An diesen Perforationen können sich Körner des granularen Materials anlagern, wenn sich die entsprechenden Perforationen durch den Vorratsbereich 4 für das granulare Material bewegen.

Die Vereinzelungstrommel 3 dreht sich, so dass die an den Perforationen anhaftenden Körner sequenziell an einer Abgabeeinrichtung 5 vorbeigeführt werden, wo sie sich von der Vereinzelungstrommel 3 lösen und an entsprechende Abgabeelemente weitergeleitet werden. Bei diesen Abgabeelementen, hier nicht dargestellt, kann es sich beispielsweise um Säschare einer Einzelkornsämaschine handeln.

Figur 1 zeigt außerdem ein Gebläse 6, welches ebenso wie der Vorratsbehälter 1 mit einem pneumatischen Förderkanal 7 verbunden ist. Mit dem Gebläse 6 kann im pneumatischen Förderkanal 7 ein Förderluftstrom gebildet werden, welcher das granulare Material vom Vorratsbehälter 1 zur Vereinzelungseinrichtung 2 fördert. Der Förderkanal mündet dabei in den Vorratsbereich 4 der Vereinzelungseinrichtung 2.

Durch das Gebläse 6 wird im pneumatischen Förderkanal 7 ein Luftüberdruck gegenüber dem Atmosphärendruck erzeugt.

Im pneumatischen Förderkanal 7 ist eine Förderschleuse 8 angeordnet. Die Fördermenge dieser Förderschleuse 8 ist einstellbar, insbesondere abhängig vom Luftdruck im pneumatischen Förderkanal 7.

Zur Bestimmung dieses Luftdrucks kann stromaufwärts der Schleuse 8 ein Drucksensor 9 vorgesehen sein, welcher den statischen und/oder dynamischen Luftdruck im Förderkanal 7 bestimmen kann.

Ebenfalls stromaufwärts von der Förderschleuse 8 sind Entlüftungsbohrungen oder -öffnungen 10 im pneumatischen Förderkanal 7 vorgesehen. Diese Entlüftungsbohrungen 10 sind unmittelbar vor der Förderschleuse 8 angeordnet. Über diese Entlüftungsbohrungen 10 kann Luft aus dem pneumatischen Förderkanal 7 entweichen, es sei denn, die Entlüftungsbohrungen 10 werden durch granulares Material blockiert. Dazu kann es kommen, wenn die Förderschleuse 8 verschlossen ist und somit die Fördermenge der Förderschleuse auf null eingestellt ist.

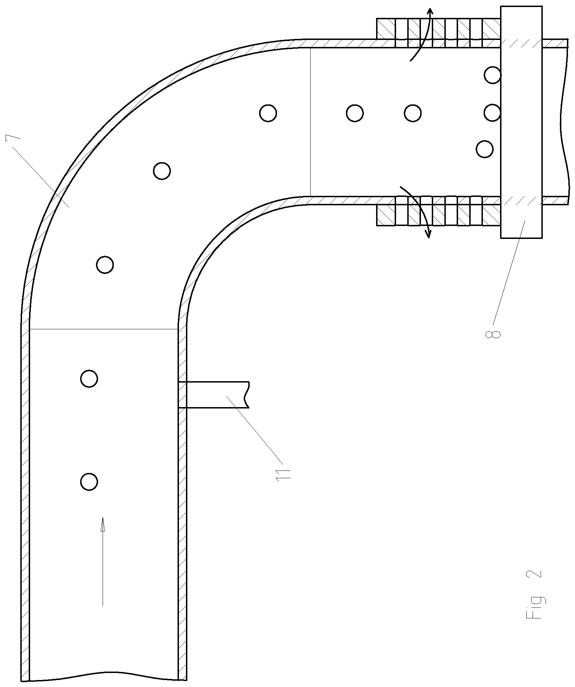

In den Figuren 2 bis 4 sind Teile der beispielhaften Vorrichtung in verschiedenen Betriebszuständen dargestellt.

Im Betriebszustand der Figur 2 wird granulares Material zunächst vom Vorratsbehälter 1 zur Förderschleuse 8 gefördert. Die Förderschleuse 8 befindet sich in diesem Beispiel in einem geschlossenen Zustand.

Da die Entlüftungsbohrungen 10 freiliegen, ist die Strömungsgeschwindigkeit der Luft im pneumatischen Förderkanal 7 hoch. Damit ist auch der dynamische Luftdruck im pneumatischen Förderkanal entsprechend hoch. Der zugehörige statische Luftdruck ist dagegen gering.

Die Förderschleuse 8 wirkt in diesem Fall auch als Druckschleuse. Mit anderen Worten kann der Luftdruck stromabwärts der Förderschleuse 8 unterschiedlich sein zu dem Luftdruck stromaufwärts der Förderschleuse 8.

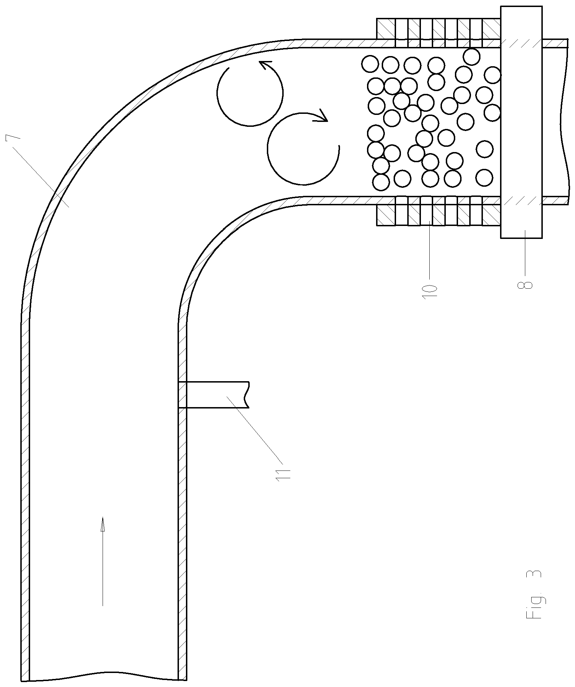

In dem Betriebszustand der Figur 3 hat sich granulares Material soweit stromaufwärts der Förderschleuse 8 angeordnet, dass die Entlüftungsbohrungen 10 weitestgehend blockiert sind. Dadurch verringert sich der dynamische Luftdruck im pneumatischen Förderkanal, wodurch auch die Strömungsgeschwindigkeit sinkt. Damit wird auch kein granulares Material mehr vom Vorratsbehälter 1 zur Förderschleuse 8 weitergeleitet. Da das Gebläse 6 weiterhin Luft in den pneumatischen Förderkanal 7 einbringt, erhöht sich der statische Luftdruck im pneumatischen Förderkanal 7.

Dieser statische Luftdruck wird durch eine in der Figur 3 angedeutete durchgängige Rohrleitung 11 zu einem Anschluss der Förderschleuse 8 geleitet. Dort kann der hohe statische Luftdruck direkt oder indirekt verwendet werden, um die Förderschleuse 8 in einen geöffneten Zustand zu bringen, bei dem die Fördermenge größer null ist. Insbesondere kann die Förderschleuse 8 derart ausgebildet sein, dass sie im geöffneten Zustand das granulare Material im Wesentlichen ungehindert durchlässt.

Das Öffnen der Förderschleuse 8 kann insbesondere stattfinden, wenn der statische Luftdruck im Förderkanal 7 stromaufwärts der Förderschleuse 8 einen ersten vorherbestimmten Wert übersteigt. Dies entspricht dem Fall, dass der dynamische Luftdruck unter einen zweiten vorherbestimmten Wert fällt.

Wenn nicht erfindungsgemäss anstelle der durchgängigen Rohrleitung 11 ein Drucksensor 9 wie in Figur 1 dargestellt vorgesehen ist, kann die Förderschleuse 8 auch über einen Antrieb geöffnet werden, beispielsweise über einen Elektromotor, wenn der statische Luftdruck über den ersten vorherbestimmten Wert steigt oder der dynamische Luftdruck unter den zweiten vorherbestimmten Wert fällt. In diesem Fall kann die Vorrichtung eine hier nicht gezeigte Steuereinheit umfassen, beispielsweise in Form eines Bordcomputers, welche die Fördermenge, hier den Öffnungszustand der Förderschleuse 8, abhängig vom bestimmten Luftdruck steuert.

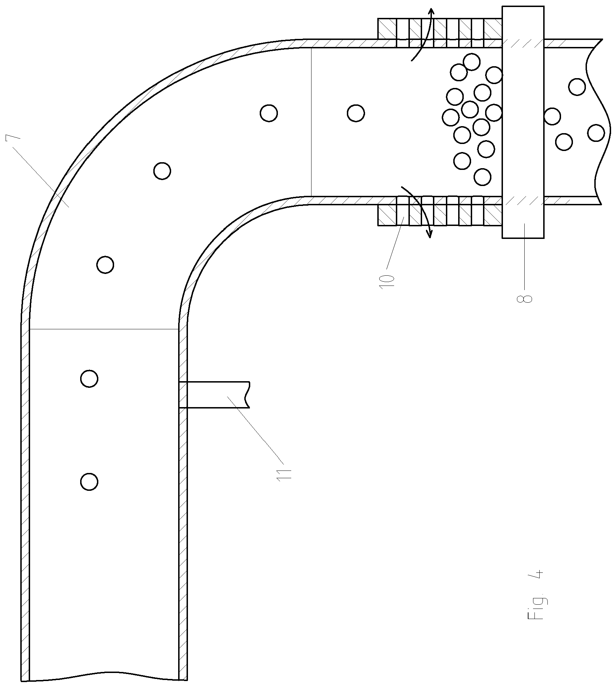

Durch das Öffnen der Förderschleuse 8 wird die stromaufwärts der Förderschleuse 8 angesammelte Menge an granularem Material an die Vereinzelungseinrichtung 2 weitergeleitet. Dadurch werden die Entlüftungsbohrungen 10 wieder freigegeben, wie in Figur 4 gezeigt.

Damit kann Luft wieder durch die Entlüftungsbohrungen 10 entweichen, wodurch der statische Luftdruck fällt und der dynamische Luftdruck im pneumatischen Förderkanal 7 steigt. Durch das Steigen des dynamischen Luftdrucks steigt auch wieder die Strömungsgeschwindigkeit der Luft im pneumatischen Förderkanal, wodurch wieder granulares Material vom Vorratsbehälter 1 zur Förderschleuse 8 gefördert wird, die daraufhin wieder in einen geschlossenen Zustand gebracht wird, in dem kein granulares Material von der Förderschleuse 8 zur Vereinzelungseinrichtung 2 gefördert wird.

Das Verschließen kann wiederum über einen Antrieb geschehen, wenn alternativ zur durchgängigen Rohrleitung 11 ein Drucksensor 9 vorgesehen ist. Dies kann insbesondere stattfinden, wenn der statische Luftdruck im Förderkanal 7 stromaufwärts der Förderschleuse 8 unter den ersten vorherbestimmten Wert fällt. Dies entspricht dem Fall, dass der dynamische Luftdruck über den zweiten vorherbestimmten Wert steigt.

Die oben beschriebene Vorrichtung erlaubt es also, pulsartig eine vorherbestimmte Menge von granularem Material der Vereinzelungseinrichtung 2 zuzuführen. Dadurch ist die Menge an granularem Material, die sich jeweils gleichzeitig in der Vereinzelungseinrichtung 2 befindet, einstellbar. Dadurch kann wiederum der Raumbedarf des Vorratsbereichs 4 optimiert werden. Außerdem können störende Beeinflussungen der Druckverhältnisse in der Vereinzelungseinrichtung 2 reduziert werden.

Die gezeigte Vorrichtung kann insbesondere Teil einer Einzelkornsämaschine sein. Diese kann neben den hier gezeigten Elementen noch weitere Elemente aufweisen, um das granulare Material auf einer landwirtschaftlichen Fläche ausbringen zu können.

Es versteht sich, dass in den zuvor beschriebenen Ausführungsbeispielen genannte Merkmale nicht auf diese speziellen Kombinationen beschränkt sind und auch in beliebigen anderen Kombinationen wie in den beigefügten Ansprüchen beansprucht möglich sind.

## Patentansprüche

1. Vorrichtung zum Fördern von auf einer landwirtschaftlichen Fläche auszubringendem granularem Material, umfassend:
einen Vorratsbehälter (1) für das granulare Material;
eine Vereinzelungseinrichtung (2); und
einen pneumatischen Förderkanal (7) zum pneumatischen Fördern von granularem Material vom Vorratsbehälter (1) zur Vereinzelungseinrichtung (2);
wobei
im pneumatischen Förderkanal (7) eine Förderschleuse (8) angeordnet ist, deren Fördermenge einstellbar ist, **dadurch gekennzeichnet**, der pneumatische Förderkanal (7) über eine durchgängige Rohrleitung (11) mit der Förderschleuse (8) verbunden ist, wobei die durchgängige Rohrleitung (11) stromaufwärts der Förderschleuse (8) in den pneumatischen Förderkanal (7) mündet, und wobei der statische Luftdruck in der durchgängigen Rohrleitung (11) direkt oder indirekt die Fördermenge der Förderschleuse (8) bestimmt.

2. Vorrichtung nach Anspruch 1, wobei die Fördermenge abhängig vom Luftdruck im pneumatischen Förderkanal (7) einstellbar ist.

3. Vorrichtung nach Anspruch 1 oder 2, wobei die Förderschleuse (8) in einen geschlossenen Zustand bringbar ist, in dem kein granulares Material von der Vorratsbehälterseite der Förderschleuse (8) zur Vereinzelungseinrichtungsseite der Förderschleuse (8) förderbar ist.

4. Vorrichtung nach einem der vorangegangenen Ansprüche, wobei der pneumatische Förderkanal (7) stromaufwärts der Förderschleuse (8) eine oder mehrere Entlüftungsbohrungen (10) oder -öffnungen aufweist.

5. Vorrichtung nach einem der vorangegangenen Ansprüche, außerdem umfassend einen Drucksensor (9), der stromaufwärts der Förderschleuse (8) angeordnet ist, wobei mit dem Drucksensor (9) der Luftdruck im pneumatischen Förderkanal (7) bestimmbar ist.

6. Vorrichtung nach Anspruch 5, wobei die Fördermenge der Förderschleuse (8) in Abhängigkeit von dem vom Drucksensor (9) bestimmten Wert einstellbar ist.

7. Vorrichtung nach einem der vorangegangenen Ansprüche, wobei die Vorrichtung derart ausgebildet ist, dass die Fördermenge null ist, wenn der statische Luftdruck unter einem ersten vorherbestimmten Wert oder der dynamische Luftdruck über einem zweiten vorherbestimmten Wert liegt, während sie größer als null ist, wenn der statische Luftdruck über dem ersten vorherbestimmten Wert oder der dynamische Luftdruck unter dem zweiten vorherbestimmten Wert liegt.

8. Vorrichtung nach einem der vorangegangenen Ansprüche, wobei die Förderschleuse (8) als Druckschleuse wirkt, insbesondere welche im geschlossenen Zustand den Bereich des Förderkanals (7) stromaufwärts der Förderschleuse (8) vom Bereich stromabwärts der Förderschleuse (8) pneumatisch trennt.

9. Einzelkornsämaschine umfassend eine Vorrichtung nach einem der vorangegangenen Ansprüche.

## Claims

1. Device for conveying granular material to be discharged over an agricultural area, comprising:
a storage container (1) for the granular material;
a singulating device (2); and
a pneumatic conveying channel (7) for pneumatically conveying granular material from the storage container (1) to the singulating device (2);
wherein
a conveying sluice (8), the conveying rate of which is adjustable, is arranged in the pneumatic conveying channel (7), **characterized in that** the pneumatic conveying channel (7) is connected to the conveying sluice (8) via a continuous pipe (11), wherein the continuous pipe (11) opens upstream of the conveying sluice (8) into the pneumatic conveying channel (7), and wherein the static air pressure in the continuous pipe (11) directly or indirectly determines the conveying rate of the conveying sluice (8).

2. Device according to Claim 1, wherein the conveying rate is adjustable depending on the air pressure in the pneumatic conveying channel (7).

3. Device according to Claim 1 or 2, wherein the conveying sluice (8) can be brought into a closed state in which no granular material can be conveyed from the storage container side of the conveying sluice (8) to the singulating device side of the conveying sluice (8).

4. Device according to one of the preceding claims, wherein the pneumatic conveying channel (7) has one or more venting bores (10) or venting openings upstream of the conveying sluice (8).

5. Device according to one of the preceding claims, also comprising a pressure sensor (9) which is arranged upstream of the conveying sluice (8), wherein the air pressure in the pneumatic conveying channel (7) can be determined with a pressure sensor (9).

6. Device according to Claim 5, wherein the conveying rate of the conveying sluice (8) is adjustable depending on the value determined by the pressure sensor (9).

7. Device according to one of the preceding claims, wherein the device is designed in such a manner that the conveying rate is zero if the static air pressure lies below a first predetermined value or the dynamic air pressure lies above a second predetermined value, while said conveying rate is greater than zero if the static air pressure lies above the first predetermined value or the dynamic air pressure lies below the second predetermined value.

8. Device according to one of the preceding claims, wherein the conveying sluice (8) acts as a pressure sluice, in particular which, in the closed state, pneumatically separates the region of the conveying channel (7) upstream of the conveying sluice (8) from the region downstream of the conveying sluice (8).

9. Single grain seeder comprising a device according to one of the preceding claims.

## Revendications

1. Ensemble de transport d'un matériau granulaire à appliquer sur une surface agricole, l'ensemble comprenant :
un récipient (1) de réserve de matériau granulaire,
un dispositif (2) de séparation du matériau en grains individuels et
un canal pneumatique de transport (7) qui transporte pneumatiquement le matériau granulaire entre le récipient de réserve (1) et le dispositif de séparation (2),
un sas de transport (8) dont le débit de transport est réglable étant disposé dans le canal (7) de transport pneumatique,
**caractérisé en ce que**
le canal (7) de transport pneumatique est raccordé au sas de transport (8) par l'intermédiaire d'un conduit tubulaire continu (11),
**en ce que** le conduit tubulaire continu (11) débouche dans le canal pneumatique de transport (7) en amont du sas de transport (8) et
**en ce que** la pression statique de l'air dans le conduit tubulaire continu (11) détermine directement ou indirectement le débit de transport du sas de transport (8).

2. Ensemble selon la revendication 1, dans lequel le débit de transport peut être réglé en fonction de la pression de l'air dans le canal (7) de transport pneumatique.

3. Ensemble selon les revendications 1 ou 2, dans lequel le sas de transport (8) peut être amené en une position fermée dans laquelle aucun matériau granulaire ne peut être transporté du côté du récipient de réserve du sas de transport (8) au côté du dispositif de séparation du sas de transport (8).

4. Ensemble selon l'une des revendications précédentes, dans lequel le canal (7) de transport pneumatique présente un ou plusieurs alésages ou ouvertures d'évent (10) en amont du sas de transport (8).

5. Ensemble selon l'une des revendications précédentes, comprenant en outre un capteur de pression (9) disposé en amont du sas de transport (8), le capteur de pression (9) permettant de déterminer la pression de l'air dans le canal (7) de transport pneumatique.

6. Ensemble selon la revendication 5, dans lequel le débit de transport dans le sas de transport (8) peut être réglé en fonction de la valeur déterminée par le capteur de pression (9).

7. Ensemble selon l'une des revendications précédentes, dans lequel le dispositif est configuré de telle sorte que le débit de transport soit nul lorsque la pression statique de l'air est située en dessous d'une première valeur préalablement définie ou lorsque la pression dynamique de l'air est située au-dessus d'une deuxième valeur préalablement définie, et soit supérieur à zéro lorsque la pression statique est située au-dessus de la première valeur préalablement définie ou lorsque la pression dynamique de l'air est située en dessous de la deuxième valeur préalablement définie.

8. Ensemble selon l'une des revendications précédentes, dans lequel le sas de transport (8) agit comme sas sous pression et en particulier sépare pneumatiquement à l'état fermé la partie du canal de transport (7) située en amont du sas de transport (8) de la partie située en aval du sas de transport (8).

9. Semeuse de grains un à un comprenant un ensemble selon l'une des revendications précédentes.
